# FASCICULE DE BREVET EUROPEEN

(11) **EP 2 513 672 B1**
(45) Date de publication et mention de la délivrance du brevet: **25.09.2013**
(21) Numéro de dépôt: 10798040.1
(22) Date de dépôt: 14.12.2010
(51) Int. Cl.: G01T 7/02, G21F 5/02

(54) **BANC D'ETALONNAGE PORTATIF D'APPAREILS DE MESURE OU DE DETECTION DE RADIATIONS**
TRAGBARES KALIBRIERWERKZEUG ZUR KALIBRIERUNG VON STRAHLUNGSMESS- ODER DETEKTIONSGERÄTEN
PORTABLE CALIBRATION JIG FOR CALIBRATING RADIATION MEASUREMENT OR DETECTION APPARATUS

(30) Priorité: 15.12.2009 FR 0958980
(43) Date de publication de la demande: 24.10.2012
(73) Titulaire: Commissariat à l'Énergie Atomique et aux Énergies Alternatives, 75015 Paris (FR)
(72) Inventeur: PAGAT, Pierre, F-91340 Ollainville (FR); SALIOU, Bruno, F-91410 Corbreuse (FR); LUCAS, Stéphane, F-91290 La Norville (FR)
(74) Mandataire: Ilgart, Jean-Christophe
(86) Numéro de dépôt international: PCT/EP2010/069652
(87) Numéro de publication internationale: WO 2011/073202

(56) Documents cités:
- WO-A2-99/24820
- US-A- 2 642 541

## Description

L'invention a trait à un banc portatif d'étalonnage d'appareils de mesure ou de détection de radiations.

Les moyens d'étalonnage de tels appareils comprennent des sources de rayonnements ionisants dont le transport et la manipulation exigent des précautions et sont sujets à des normes de sécurité. De plus, des appareils différents sont en général étalonnés avec des sources différentes. Il serait avantageux de disposer d'un banc prévu pour accomplir divers étalonnage, mais l'intégration des sources dans un même banc peut conduire soit à des interférences entre les sources, qui faussent les mesures, soit à une construction trop lourde pour être portative et d'emploi commode.

Une autre difficulté qu'on rencontre est que la source doit être placée à une position bien déterminée de l'appareil à étalonner pour donner une mesure reproductible.

Les moyens d'étalonnage connus des inventeurs comprennent une seule source radioactive. L'invention concerne un banc d'étalonnage dont les avantages principaux sont qu'il est portatif et léger, qu'il comprend des sources multiples, qu'il autorise des mesures faciles et bien reproductibles, qu'il offre une bonne sécurité contre les accidents et le vol et qu'il est facilement adaptable à divers modèles d'appareils. Les inconvénients mentionnés ci-dessus sont évités, et la multiplicité de sources n'impose pas de grandes dimensions au banc. Le banc satisfait facilement aux exigences prévues par les différentes normes, et la réglementation française en vigueur sur les rayonnements ionisants.

Le document WO-A-99/24820 a trait à un banc de mesures qui comprend un ensemble de sources radioactives et un détecteur. Il peut comprendre une paires de volets porteurs chacun d'une pluralité de sources radioactives encastrées dans des logements, ces volets pouvant être placés côte à côte dans une position d'ouverture, ou en contact mutuel par leur face d'émission de rayonnement dans une position de fermeture. Les plaques principales des volets sont toutefois dépourvues d'empreintes de réception des appareils à étalonner, contrairement à ce qu'on envisage ici.

Sous une forme générale, l'invention concerne un banc portatif d'étalonnage d'appareils de mesure ou de détection de radiations, comprenant: une pluralité de sources radioactives ; une enveloppe composée de deux volets comprenant des cavités dans lesquelles les sources sont contenues et immobilisées; une articulation joignant les volets et permettant des mouvements réciproques des volets jusqu'à une position de fermeture du banc où les volets sont jointifs par des faces internes où s'ouvrent les cavités, et une position d'ouverture du banc où les volets sont côte à côte et les faces internes orientées dans une même direction; des moyens de verrouillage des volets dans la position de fermeture; et des plaques couvrant les sources, installées aux faces internes des volets et comprenant des empreintes placées devant les sources, les empreintes étant façonnées de façon que des portions en relief complémentaires des appareils s'emboîtent sur elles.

Le banc, pouvant être muni d'une poignée ou d'un élément de préhension du même genre, peut être transporté facilement et avec des conditions de sécurité puisque les faces internes des volets, par lesquelles les sources émettent principalement leur rayonnement, sont jointes et cachées quand les volets sont à la position fermée. Les empreintes des plaques fournissent des références de position entre les sources et les appareils à étalonner par un simple contact mutuel de butée, utilisable dès que le banc est ouvert. Les interférences entre les sources sont réduites.

Les plaques sont avantageusement continues afin de couvrir complètement les sources et de rendre plus difficiles les accidents ou les vols.

Il peut toutefois être avantageux que les plaques soient amovibles, par exemple vissées aux bords des volets, pour permettre le remplacement des sources, ou, de façon plus caractéristique, le remplacement des plaques par d'autres qui comprendraient des empreintes différentes, adaptées à d'autres appareils, selon les étalonnages à entreprendre.

Plusieurs empreintes peuvent aussi être façonnées en gradins superposés devant au moins une des sources pour étalonner autant d'appareils différents.

Un des volets peut être composé de demi-volets juxtaposés. Une telle disposition facilite l'aménagement du banc dans le cas où les sources concernent des radio-éléments d'énergies très différentes, en permettant une ouverture progressive, partielle ou complète, du banc.

Un blindage aux rayonnements peut être disposé autour de certaines des sources tant dans un souci de protection que pour éviter les interférences avec d'autres sources.

Outre les empreintes d'emboîtement des instruments à étalonner, les faces internes des volets ou les plaques peuvent comprendre aussi d'autres repères de positionnement, tels que des pions de positionnement.

L'émission d'un rayonnement résiduel peut être tolérée hors du banc quand il est fermé. Une ou plusieurs empreintes supplémentaires peuvent alors avantageusement être façonnées sur la face externe d'un des volets devant une des sources émettant ce rayonnement résiduel de façon à fournir une autre référence de position à un appareil déterminé, en s'emboîtant sur cet appareil, permettant ainsi un étalonnage sans ouvrir le banc.

L'invention sera maintenant décrite en liaison aux figures :
- la figure 1 illustre de face le banc à l'état ouvert ;
- la figure 2 est une vue de côté du banc pendant un étalonnage ;
- la figure 3 illustre de face le banc à l'état fermé ;
- la figure 4 illustre de face le banc à un état semi-fermé ;
- et la figure 5 est une vue de côté du banc pendant un étalonnage spécial.

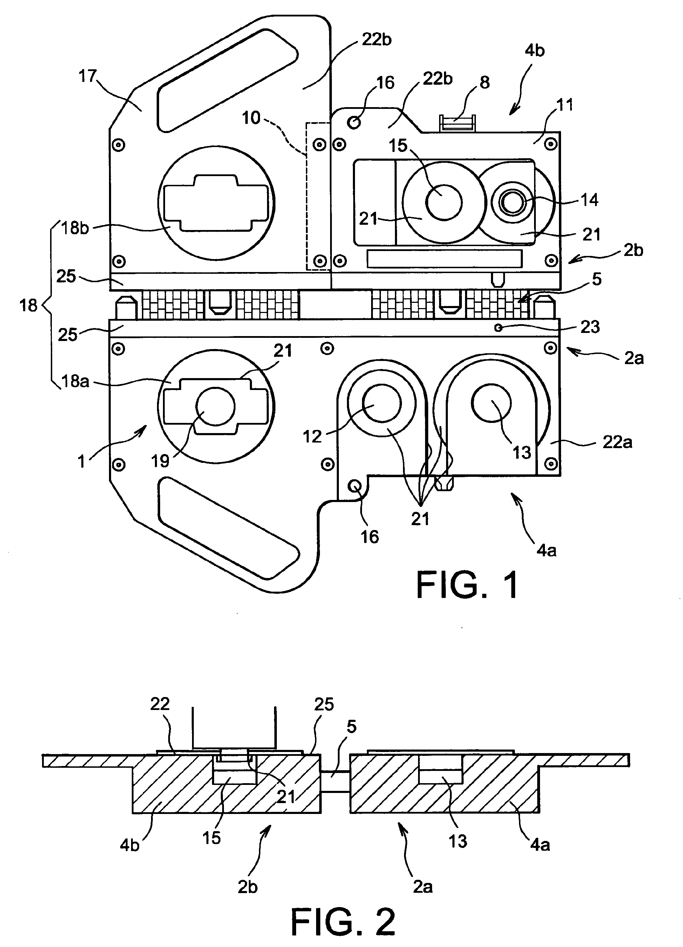

On s'appuiera surtout sur la figure 1 pour cette partie-ci de la description. Le banc portatif de la réalisation complètement illustrée comprend trois parties de mesure principales, une première partie 1 étant occupée par les sources les plus irradiantes et les deux autres parties 2a et 2b étant réservées aux sources les moins irradiantes, nécessitant peu de protection biologique à l'égard de l'opérateur.

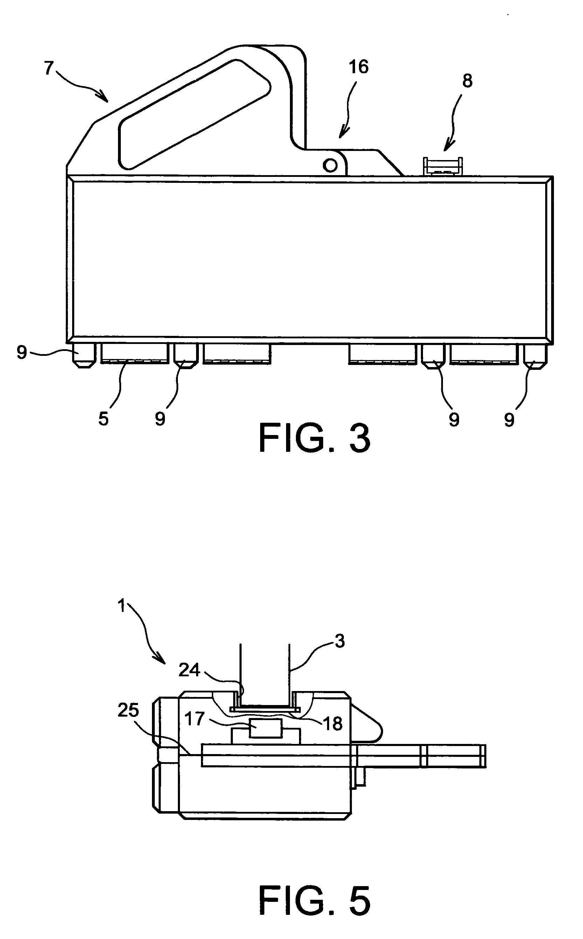

Le banc comprend tout d'abord deux volets 4a et 4b articulés l'un à l'autre autour de charnières 5 à leur face inférieure, et pourvus à leur face supérieure d'une poignée 7 de préhension, d'une grenouillère 8 de verrouillage et enfin de trous de cadenas 16 s'étendant à travers les deux coques 4a et 4b pour assurer un verrouillage plus sûr du banc en position fermée. Quatre pieds 9 sont encore disposés à la face inférieure du banc pour le poser en position verticale à l'état fermé (figure 3), malgré les charnières 5.

Dans l'état de fermeture du banc, illustré aux figures 3 et 5, les volets 4a et 4b sont jointifs par leurs faces internes 25, et dans l'état d'ouverture, illustré à la figure 1, les volets 4a et 4b sont côte à côte avec les faces internes 25 dirigées dans une même direction.

Les volets 4a et 4b sont plats avec une épaisseur suffisante pour que des sources radioactives d'étalonnage y soient contenues en étant encastrées dans des cavités séparées, creusées dans la matière des volets. Les cavités s'ouvrent toutes sur les faces internes 25 des volets 4a et 4b ; mais elles sont couvertes par des plaques 22a et 22b boulonnées sur le bord des faces internes 25.

Les sources radioactives ne sont donc pas exposées même quand le banc est ouvert, ce qui exclut leur perte accidentelle et rend leur vol plus difficile. Elles émettent leur plus grand débit de rayonnement à travers les plaques 22a et 22b, qui seront donc en général placées devant les appareils à étalonner après avoir ouvert le banc. La matière des volets 4a et 4b environnant les cavités suffit à arrêter les rayonnements α et β les moins pénétrants vers les faces externes du banc et vers les cavités voisines, de sorte que l'environnement est protégé et qu'aucune interférence importante avec d'autres sources n'est à craindre. Cela n'est pas forcément vérifié avec d'autres rayonnements plus pénétrants si les volets 4a et 4b sont en matière synthétique et épais de seulement quelques centimètres pour que le banc reste léger.

Le premier volet 4a comporte une source de carbone 14 (12) et une source d'américium 241 (13) appartenant à la partie de mesure 2a, respectivement pour l'étalonnage au rayonnement β et pour l'étalonnage au rayonnement α ; il comporte une source de césium 137 (19), appartenant à la partie de mesure 1, qui est affectée à l'étalonnage au rayonnement γ à une énergie de 661 *keV.* Et le second volet 4b comporte une source de fer 55 (14) pour l'étalonnage au rayonnement X et une autre source d'américium 241 (15) pour l'étalonnage au rayonnement γ à une énergie de 60 *keV,* tous deux appartenant à la partie de mesure 2b.

Les sources 12 et 13 peuvent être regroupées sans inconvénient et placées à peu de distance l'une de l'autre car leurs rayonnements sont à la fois peu pénétrants et bien distincts, de sorte que leurs interférences ne sont guère à redouter, les appareils sensibles à l'un de ces rayonnements étant en général insensibles à l'autre. Les émissions qui ne sont pas dirigées vers les ouvertures des cavités du volet 4a sont absorbées par la matière environnante.

Les sources 14 et 15 peuvent aussi être regroupées sans inconvénient puisque les rayonnements X et γ à basse énergie qu'elles émettent sont aussi, en général, bien distingués par les appareils de mesure. Mais comme ces rayonnements sont plus pénétrants, les interférences avec d'autres sources, comme celles de la partie de mesure 2a, peuvent être redoutées, ce qui justifie la position de la partie de mesure 2b sur l'autre volet 4b, puisqu'en position de mesure le banc est ouvert et ces deux parties de mesure 2a et 2b sont suffisamment éloignées. La protection des alentours, le banc étant fermé, est obtenue en choisissant des sources 14 et 15 de faible activité.

Des difficultés particulières existent toutefois avec la source 19 à haute énergie. Cette source est munie d'un blindage de protection biologique 18a et 18b en plomb, partagé entre les deux volets 4a et 4b et qui l'entoure complètement quand le banc est fermé mais la démasque quand il est ouvert.

A l'état d'ouverture, la source 19 est isolée, placée à une certaine distance de chacune des autres sources 12, 13, 14 et 15, avec la volonté de limiter les interférences. Une construction particulière du banc est aussi exploitée.

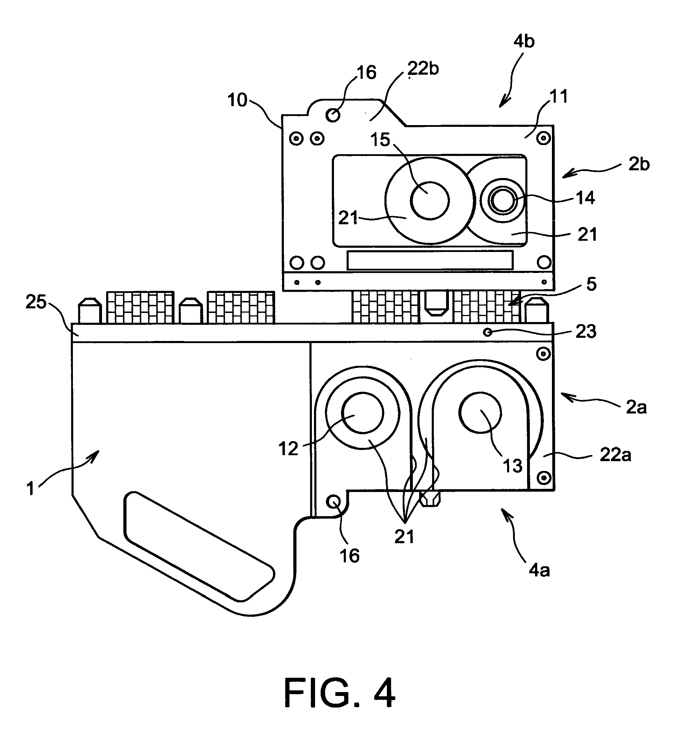

Le volet 4b est composé d'un premier demi-volet 11 comprenant la partie de mesure 2b et placé en face de la partie de mesure 2a, et d'un second demi-volet placé en face de la partie de mesure 1. L'ouverture de banc peut être partielle, selon l'illustration de la figure 4 : le premier demi-volet 17 reste alors fermé. La source 19 reste complètement entourée par le blindage 18 alors que toutes les autres sources 12, 13, 14, et 15 sont accessibles et peuvent servir aux étalonnages sans qu'on ait à redouter d'interférence avec le rayonnement de la source 19, ni d'ailleurs de fuite importante de ce rayonnement vers l'extérieur.

Le second demi-volet 17 est ouvert seulement quand la source 19 accomplit un étalonnage : la partie de blindage 18b étant écartée, la source 19 émet son rayonnement vers l'extérieur à travers la plaque 22a. Aucun étalonnage n'est alors entrepris avec les autres sources 12, 13, 14, et 15.

Un élément important de l'invention est la présence d'empreintes 21 disposées devant les sources 12, 13, 14, 15 et 19 et situées sur les plaques 22a et 22b. Comme le montre la figure 2, l'étalonnage s'effectue usuellement en plaçant un appareil 3 sur le banc et en ajustant son extrémité de visée sur une des empreintes 21 appropriée à lui par emboîtement jusqu'à obtenir la butée : la source concernée, 15 par exemple, est alors à une distance connue de l'appareil 3, ce qui permet un étalonnage précis. Les empreintes 21 servent donc à calibrer les étalonnages. Plusieurs d'entre elles sont en général associées à chacune des sources afin de permettre d'étalonner des appareils différents. Elles sont généralement placées autour des sources et droit devant elles afin de s'ajuster sur l'extrémité de visée de l'appareil 3, mais certaines peuvent être placées ailleurs afin de s'ajuster sur d'autres reliefs complémentaires de l'appareil 3. Les plaques 22, ou même d'autres portions du banc, comme les faces internes 25 des volets 4a et 4b à côté des plaques 22, peuvent être munies d'autres repères, en relief ou non, comme des pions de positionnement, pour fournir d'autres ajustements de position ; un tel pion de positionnement 23 a été représenté à la figure 1.

Les plaques 22 peuvent être remplacées facilement et dans des conditions de sécurité appropriée pour adapter le banc à l'étude d'autres appareils.

Quoique les volets 4a et 4b aient une épaisseur suffisante pour arrêter suffisamment le rayonnement des sources, en ajoutant éventuellement un blindage tel que 18 pour certaines sources, la sortie d'un rayonnement résiduel peut être tolérée. Il est même exploité dans certaines circonstances comme le représente la figure 5, où le volet 4b est pourvu d'une autre empreinte 24 sur sa face externe, en face de la source 19 de césium 137. Un appareil 3 approprié peut être ajusté sur cette portion en relief 24 pour recevoir un rayonnement résiduel de la source 19 et permettre d'accomplir l'étalonnage sans ouvrir le banc. Les plaques 22 vissées étant fines et laissant passer plus de rayonnement, l'étalonnage s'effectuera en général à enveloppe 4 ouverte.

Le premier demi-volet 11 porte une languette 10 qui couvre une partie de la face externe du second demi-volet 17. De plus, c'est lui qui porte le trou de cadenas 16 et la partie de la grenouillère 8 qui sont placés sur le second 4b. Le verrouillage est donc possible seulement à la fermeture complète du banc, la languette 10 retenant le second demi-volet 17 contre le premier volet 4a tant que le premier demi-volet 11 n'est pas rouvert.

Un dispositif de localisation par satellite, non représenté, peut être ajouté.

## Revendications

1. Banc portatif d'étalonnage d'appareils (3) de mesure ou de détection de radiations, comprenant : une pluralité de sources ionisantes (12, 13, 14, 15, 19); une enveloppe composée de deux volets (4a, 4b) comprenant des cavités dans lesquelles les sources sont contenues et immobilisées; une articulation (5) joignant les volets et permettant des mouvements réciproques des volets jusqu'à une position de fermeture du banc où les volets sont jointifs par des faces internes où s'ouvrent les cavités, et une position d'ouverture du banc où les volets sont côte à côte et les faces internes orientées dans une même direction; des moyens de verrouillage (8) des volets dans la position de fermeture; le banc portatif étant **caractérisé en ce qu'**il comprend également des plaques (22) couvrant les sources, installées aux faces internes de volets et comprenant des empreintes (21) placées devant les sources, les empreintes étant façonnées de façon que des portions en relief complémentaires des appareils s'emboîtent sur elles.

2. Banc portatif d'étalonnage selon la revendication 1, **caractérisé en ce que** la plaque comprend une pluralité d'empreintes, disposées en gradins, devant au moins une des sources.

3. Banc portatif d'étalonnage selon la revendication 1 ou 2, **caractérisé en ce qu'**il comprend des repères de positionnement (23) sur la face interne d'au moins un des volets ou une des plaques (22a, 22b).

4. Banc portatif d'étalonnage selon l'une quelconque des revendications précédentes, **caractérisé en ce qu'**il comprend, sur une face externe d'un des volets, opposée à la face interne, au moins une empreinte (24) placée devant une des sources et façonnée de façon à s'emboîter sur une portion en relief complémentaire d'un des appareils (3).

5. Banc portatif d'étalonnage selon l'une quelconque des revendications précédentes, **caractérisé en ce que** l'un des volets (4b) est composé de deux demi-volets (11, 17), les demis-volets étant mobiles séparément autour de l'articulation (5).

6. Banc portatif d'étalonnage selon la revendication 5, **caractérisé en ce qu'**il comprend une languette placée sur un premier des demi-volets (11) et couvrant la face externe d'un second des demi-volets (17).

7. Banc portatif d'étalonnage selon la revendication 5, **caractérisé en ce que** l'un des demi-volets (17) comprend un blindage (18b) venant couvrir une des sources (19) quand ledit demi-volet (17) est dans la position de fermeture.

8. Banc portatif d'étalonnage selon l'une quelconque des revendications précédentes, **caractérisé en ce qu'**il comprend au moins une source de rayonnement α ou β et une source de rayonnement X ou γ.

9. Banc portatif d'étalonnage selon la revendication 8, **caractérisé en ce qu'**il comprend une source de rayonnement α et une source de rayonnement β sur un des volets, une source de rayonnement γ et une source de rayonnement X sur l'autre des volets.

10. Banc portatif d'étalonnage selon la revendication 7 et 9, **caractérisé en ce qu'**il comprend une source isolée de rayonnement γ, la source de rayonnement α ou β et la source de rayonnement X ou γ étant réparties sur les deux volets, la source isolée de rayonnement γ étant entourée d'un blindage (18a) et étant la source couverte par le blindage (18b) du demi-volet (27).

## Patentansprüche

1. Tragbarer Stand zur Kalibrierung von Geräten (3) zur Messung oder Detektion von Strahlungen, umfassend: eine Mehrzahl von ionisierenden Quellen (12, 13, 14, 15, 19), eine Hülle, die aus zwei Teilen (4a, 4b) gebildet ist, welche Vertiefungen umfassen, in welchen die Quellen enthalten und fixiert sind, ein Gelenk (5) das die Teile verbindet und reziproke Bewegungen der Teile ermöglicht, bis zu einer Schließposition des Standes, in welcher die Teile an Innenflächen, an welchen sich die Vertiefungen öffnen, aneinander liegen, und bis zu einer Öffnungsposition des Standes, in welcher sich die Teile nebeneinander befinden und die Innenflächen in eine gleiche Richtung orientiert sind, Verriegelungsmittel (8) für die Teile in der Schließposition, wobei der tragbare Stand **dadurch gekennzeichnet ist, dass** er weiterhin die Quellen bedeckende Platten (22) umfasst, die an den Innenflächen der Teile installiert sind und vor den Quellen positionierte Vertiefungen (21) umfassen, wobei die Vertiefungen so ausgebildet sind, dass komplementäre vorstehende Abschnitte der Geräte auf diese passen.

2. Tragbarer Stand zur Kalibrierung nach Anspruch 1, **dadurch gekennzeichnet, dass** die Platte eine Mehrzahl von Vertiefungen umfasst, die stufenförmig angeordnet sind, vor wenigstens einer der Quellen.

3. Tragbarer Stand zur Kalibrierung nach Anspruch 1 oder 2, **dadurch gekennzeichnet, dass** er Positionierungsmarken (23) auf der Innenfläche von wenigstens einem der Teile oder einer der Platten (22a, 22b) umfasst.

4. Tragbarer Stand zur Kalibrierung nach einem der vorhergehenden Ansprüche, **dadurch gekennzeichnet, dass** er auf einer Außenfläche von einem der Teile, gegenüber der Innenfläche, wenigstens eine Vertiefung (24) umfasst, die vor einer der Quellen positioniert und so ausgebildet ist, dass sie auf einen komplementären vorstehenden Abschnitt von einem der Geräte (3) passt.

5. Tragbarer Stand zur Kalibrierung nach einem der vorhergehenden Ansprüche, **dadurch gekennzeichnet, dass** eines der Teile (4b) aus zwei Teil-Hälften (11, 17) zusammengesetzt ist, wobei die Teil-Hälften getrennt um das Gelenk (5) herum beweglich sind.

6. Tragbarer Stand zur Kalibrierung nach Anspruch 5, **dadurch gekennzeichnet, dass** er eine Zunge umfasst, die auf einer ersten der Teil-Hälften (11) positioniert ist und die Außenfläche von einer zweiten der Teil-Hälften (17) bedeckt.

7. Tragbarer Stand zur Kalibrierung nach Anspruch 5, **dadurch gekennzeichnet, dass** eine der Teil-Hälften (17) eine Abschirmung (18b) umfasst, welche zum Abdecken einer der Quellen (19) kommt, wenn die Teil-Hälfte (17) sich in der Schließposition befindet.

8. Tragbarer Stand zur Kalibrierung nach einem der vorhergehenden Ansprüche, **dadurch gekennzeichnet, dass** er wenigstens eine Quelle für Alpha- oder Betastrahlung und eine Quelle für Röntgen- oder Gammastrahlung umfasst.

9. Tragbarer Stand zur Kalibrierung nach Anspruch 8, **dadurch gekennzeichnet, dass** er eine Quelle für Alphastrahlung und eine Quelle für Betastrahlung auf einem der Teile und eine Quelle für Gammastrahlung eine Quelle für Röntgenstrahlung auf dem anderen Teil umfasst.

10. Tragbarer Stand zur Kalibrierung nach Anspruch 7 und 9, **dadurch gekennzeichnet, dass** er eine isolierte Quelle für Gammastrahlung umfasst, wobei die Quelle für Alpha- oder Betastrahlung und die Quelle für Röntgen- oder Gammastrahlung auf den zwei Teilen verteilt sind, wobei die isolierte Quelle für Gammastrahlung von einer Abschirmung (18a) umgeben ist und die Quelle ist, die von der Abschirmung (18b) von der Teil-Hälfte (27) bedeckt ist.

## Claims

1. Portable bench for calibrating apparatus (3) for measuring or for detecting radiation, comprising: a plurality of ionising sources (12, 13, 14, 15, 19), a casing having two flaps (4a, 4b) comprising cavities in which the sources are contained and immobilised, a hinged connection (5) connecting the flaps and permitting reciprocal movements of the flaps up to a closed position of the bench, in which the flaps are joined at internal faces where the cavities open and an open position of the bench in which the flaps are side by side and the internal faces are oriented in the same direction; means (8) for locking the flaps in the closed position, the portable bench being **characterised in that** it also comprises plates (22) covering the sources, installed on the inner faces of the flaps and comprising indentations (21) placed in front of the sources, these indentations being shaped in such a way that the complementary portions in relief of the apparatus fit into them.

2. Portable calibration bench according to claim 1, **characterised in that** the plate comprises a plurality of indentations arranged in tiers in front of at least one of the sources.

3. Portable calibration bench according to claim 1 or 2, **characterised in that** it comprises positioning markers (23) on the inner face of at least one of the flaps or one of the plates (22a, 22b).

4. Portable calibration bench according to any one of the preceding claims, **characterised in that** it comprises on an outer face of one of the flaps, opposite the inner face, at least one indentation (24) placed in front of one of the sources and shaped in such a manner that it fits over a raised portion of one of the portions of apparatus (3).

5. Portable calibration bench according to any one of the preceding claims, **characterised in that** one of the flaps (4b) is composed of two half-flaps (11,17), these half-flaps being separately movable around the hinged connection (5).

6. Portable calibration bench according to claim 5, **characterised in that** it comprises a tongue positioned on the first of the half-flaps (11) and covering the outer face of the second half-flap (17).

7. Portable calibration bench according to claim 5, **characterised in that** one of the half-flaps (17) comprises a shield (18b) covering one of the sources (19) when the half-flap (17) is in the closed position.

8. Portable calibration bench according to any one of the preceding claims, **characterised in that** it comprises at least one source of α or β radiation and one source of X or γ radiation.

9. Portable calibration bench according to claim 8, **characterised in that** it comprises a source of α radiation and a source of β radiation on one of the flaps and a source of γ radiation and a source of X radiation on the other flap.

10. Portable calibration bench according to claims 7 and 9, **characterised in that** it comprises an isolated source of γ radiation, the source of α or β radiation and the source of X or γ radiation being distributed between the two flaps, the isolated source of γ radiation being surrounded by a shield (18a) and being the source covered by the shield (18b) of the half-flap (17).
